# EUROPEAN PATENT APPLICATION

(11) **EP 4 759 585 A1**
(43) Date of publication of application: **17.06.2026**
(21) Application number: 25216573.3
(22) Date of filing: 18.11.2025
(51) Int. Cl.: B60K 1/00

(54) **ELECTRIC VEHICLE**

(30) Priority: 11.12.2024 JP 2024216885
(71) Applicant: Suzuki Motor Corporation, Shizuoka 432-8611 (JP)
(72) Inventor: OUCHI, Kosuke, HAMAMATSU-SHI, 432-8611 (JP); NARA, Tomonobu, HAMAMATSU-SHI, 432-8611 (JP)
(74) Representative: Plasseraud IP

(57) **Abstract**

[Problem to be Solved]

To provide an electric vehicle (1) that can protect a high-voltage component (16) from a load in the event of a frontal collision of a vehicle while saving space in an engine compartment (3).

[Solution]

A driving device (30) includes a case (40) including a cylindrical cylinder portion (40A) extending in the vehicle width direction and a bulged portion (40B) bulging toward the vehicle front from a vehicle widthwise one end portion of the cylinder portion (40A), a right front bracket (11) is connected to a vehicle widthwise other end portion of the cylinder portion (40A), the right front bracket (11) extends toward the vehicle front while being inclined toward the vehicle widthwise other side from the vehicle widthwise other end portion of the cylinder portion (40A), a mount insulator (15) is connected to a front end portion (11E) of the right front bracket (11), and a high-voltage component (16) is disposed in a first space (S1) in front of the cylinder portion (40A) and behind a first virtual line (L1) passing through a front end position of a mount device including the mount insulator (15) and the right front bracket (11) and a front end position of the bulged portion (40B).

## Description

### [Technical Field]

The present invention relates to an electric vehicle.

### [Background Art]

Patent Literature 1 (JP6256234B) describes a technology in which an inverter is disposed above a driving device case accommodating a motor to prevent damage to the high-voltage inverter and electrical leakage in the event of a frontal collision of the vehicle.

### [Citation List]

### [Patent Literature]

[Patent Literature 1] JP6256234B

### [Summary of Invention]

### [Technical Problem]

However, there is a problem in the technology described in Patent Literature 1 that it is difficult to save space in an engine compartment because the inverter is disposed above the driving device.

In view of the foregoing, the present invention aims to provide an electric vehicle that can protect a high-voltage component from a load in the event of a frontal collision of a vehicle while saving space in an engine compartment.

### [Solution to Problem]

To solve the above problem, the present invention provides an electric vehicle including: a driving device disposed in an engine compartment formed in a front portion of the vehicle, the driving device being configured to generate a motor torque for traveling; and a bracket that supports a vehicle widthwise end portion of the driving device to a vehicle body, characterized in that: a high-voltage component is disposed on a front surface of the driving device; the driving device includes a case, the case including a cylindrical cylinder portion extending in a vehicle width direction and a bulged portion bulging toward a vehicle front from a vehicle widthwise one end portion of the cylinder portion; the bracket is connected to a vehicle widthwise other end portion of the cylinder portion; the bracket extends toward the vehicle front while being inclined toward a vehicle widthwise other side from the vehicle widthwise other end portion of the cylinder portion; a mount insulator including an elastic member is connected to a front end portion of the bracket; and the high-voltage component is disposed in a first space in front of the cylinder portion and behind a first virtual line passing through a front end position of a mount device including the mount insulator and the bracket and a front end position of the bulged portion.

### [Advantageous Effect of Invention]

As described above, according to the present invention, it is possible to provide an electric vehicle that can protect a high-voltage component from a load in the event of a frontal collision of a vehicle while saving space in an engine compartment.

### [Brief Description of Drawings]

[Figure 1] Figure 1 is a plan view of a driving device of an electric vehicle according to an example of the present invention.
[Figure 2] Figure 2 is a back view of the driving device of the electric vehicle according to the example of the present invention.
[Figure 3] Figure 3 is a right side view of the driving device of the electric vehicle according to the example of the present invention.
[Figure 4] Figure 4 is a front view of the driving device of the electric vehicle according to the example of the present invention.
[Figure 5] Figure 5 is a cross-sectional view taken along arrows V, V of the electric vehicle illustrated in Figure 3.
[Figure 6] Figure 6 is a plan view of the driving device, a front bracket, and a high-voltage component of the electric vehicle according to the example of the present invention.
[Figure 7] Figure 7 is a left side view of the driving device, the front bracket, and the high-voltage component of the electric vehicle according to the example of the present invention.

### [Description of Embodiment]

An electric vehicle according to an embodiment of the present invention is an electric vehicle including: a driving device disposed in an engine compartment formed in a front portion of the vehicle, the driving device being configured to generate a motor torque for traveling; and a bracket that supports a vehicle widthwise end portion of the driving device to a vehicle body, characterized in that: a high-voltage component is disposed on a front surface of the driving device; the driving device includes a case, the case including a cylindrical cylinder portion extending in a vehicle width direction and a bulged portion bulging toward a vehicle front from a vehicle widthwise one end portion of the cylinder portion; the bracket is connected to a vehicle widthwise other end portion of the cylinder portion; the bracket extends toward the vehicle front while being inclined toward a vehicle widthwise other side from the vehicle widthwise other end portion of the cylinder portion; a mount insulator including an elastic member is connected to a front end portion of the bracket; and the high-voltage component is disposed in a first space in front of the cylinder portion and behind a first virtual line passing through a front end position of a mount device including the mount insulator and the bracket and a front end position of the bulged portion. With this configuration, the electric vehicle according to the embodiment of the present invention can protect a high-voltage component from a load in the event of a frontal collision of a vehicle while saving space in an engine compartment.

### [Example]

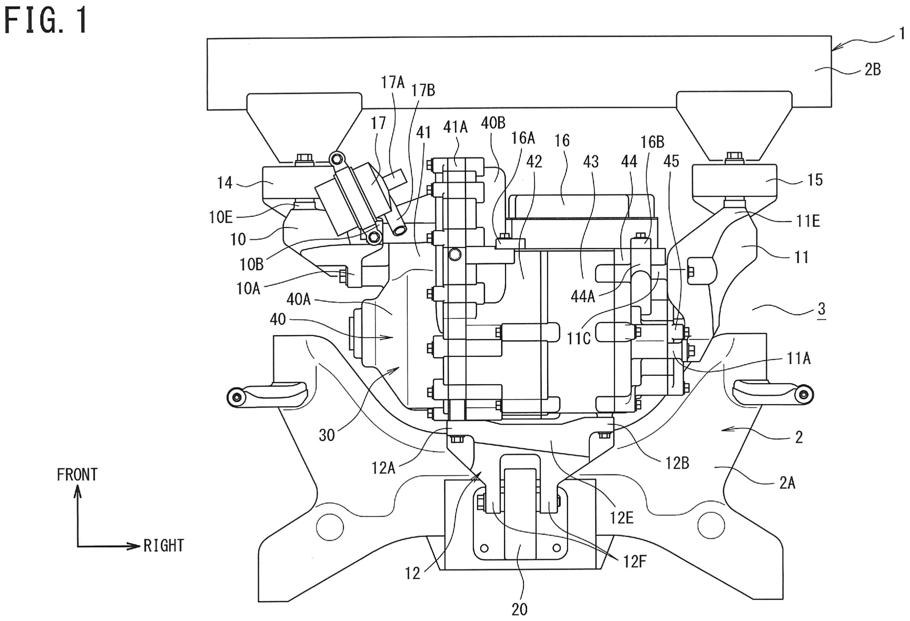

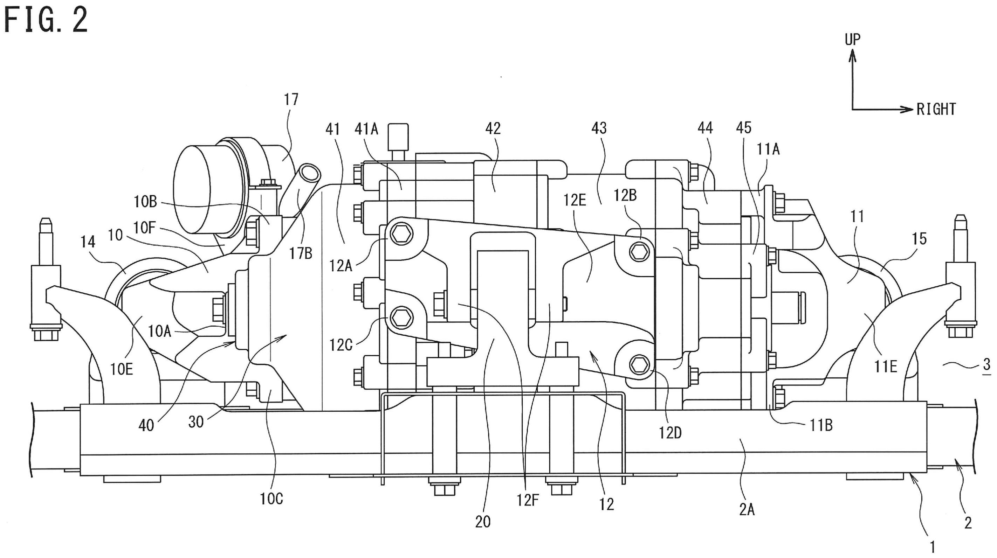

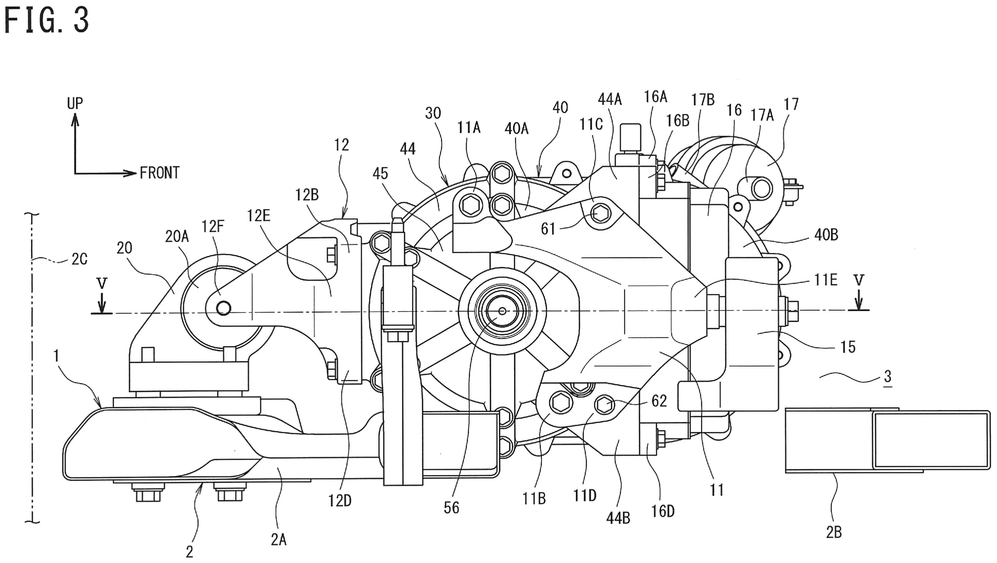

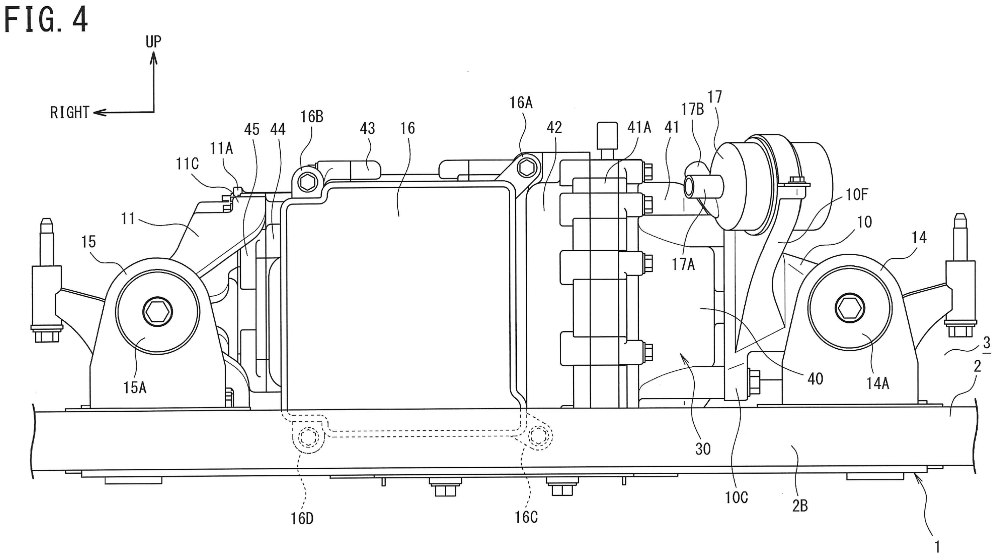

Hereinafter, an electric vehicle according to an example of the present invention will be described with reference to the drawings. Figures 1 to 7 are diagrams illustrating the electric vehicle according to the example of the present invention.

In Figures 1 to 7, the upper, lower, front, rear, left, and right directions are based on an electric vehicle when a component is disposed in the vehicle, and a front-rear direction refers to the front-rear direction of the vehicle, a left-right direction refers to the left-right direction of the vehicle (vehicle width direction), and an up-down direction refers to the up-down direction of the vehicle (height direction of the vehicle).

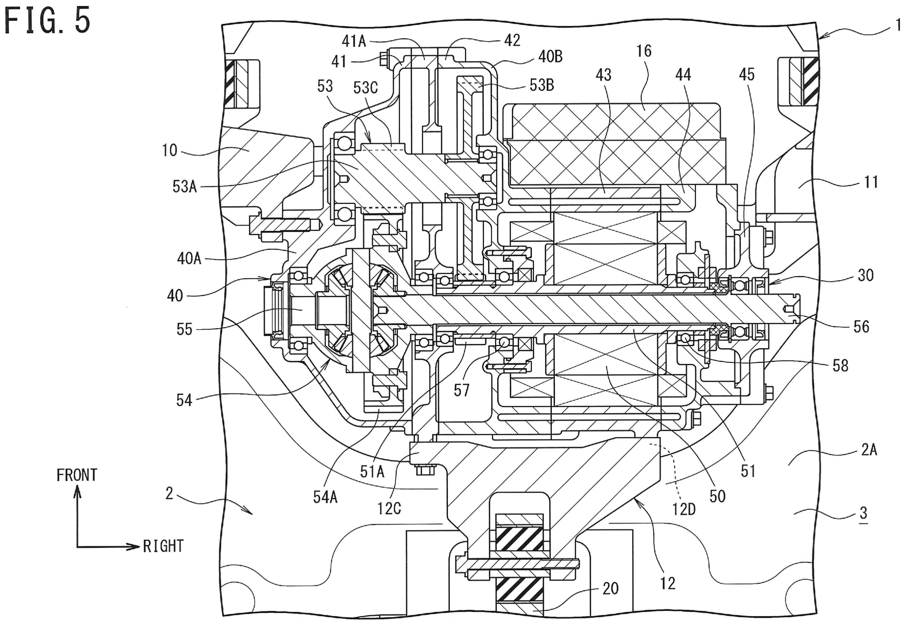

As illustrated in Figure 1, a driving device 3 that generates a motor torque for traveling is provided in an engine compartment 3 in a front portion of a vehicle 1. The driving device 30 is disposed horizontally in the engine compartment 3 such that its internal motor output shaft 51 (see Figure 5) extends in the vehicle width direction. The vehicle 1 of the present example forms an electric vehicle.

Driving wheels (not illustrated) are disposed on the left and right of the driving device 30, and rotation output from the driving device 30 is transmitted to the driving wheels. The vehicle 1 includes a vehicle body 2, and the vehicle body 2 includes a subframe 2A and a vehicle body member 2B. The subframe 2A and the vehicle body member 2B form a bottom portion of the vehicle body 2 and support the driving device 30. The subframe 2A supports a rear portion of the driving device 30, a lower arm (not illustrated), and other components. The vehicle body member 2B supports vehicle widthwise end portions and other components of the driving device 30.

As illustrated in Figure 5, the driving device 30 includes a motor 50, a deceleration mechanism 53, a differential device 54, and a split case 40 as a housing accommodating these components.

The case 40 includes a first case 41 forming a left end portion of the driving device 30, a second case 42 fastened to a right end portion of the first case 41, a third case 43 fastened to a right end portion of the second case 42, a fourth case 44 connected to a right end portion of the third case 43, and a cover member 45 fastened to a right end portion of the fourth case 44.

The first case 41 includes a partition wall member 41A in its right end portion. The partition wall member 41A extends in the front-rear direction and up-down direction to partition an internal space of the first case 41 from an internal space on the second case 42 side. The partition wall member 41Arotatably supports a left end portion of the motor output shaft 51 of the motor 50 and a right end portion of the differential device 54, and allows a deceleration shaft 53A of the deceleration mechanism 53 to pass therethrough.

The motor 50 is disposed in the third case 43. The hollow motor output shaft 51 for outputting a motor torque is provided at the center of the motor 50. The motor output shaft 51 extends in the vehicle width direction from the inside of the second case 42 to the inside of the fourth case 44.

The second case 42 is provided with a bearing 57 that pivotally supports a part of the motor output shaft 51 on the left side of the motor 50 in a freely rotatable manner. The fourth case 44 is provided with a bearing 58 that pivotally supports a part of the motor output shaft 51 on the right side of the motor 50 in a freely rotatable manner.

The deceleration mechanism 53 that decelerates the rotation transmitted from the motor 50 and the differential device 54 that transmits the rotation decelerated by the deceleration mechanism 53 to left and right drive shafts 55, 56 in a differentially rotatable manner are disposed in the first case 41 and the second case 42.

The differential device 54 is disposed on the left side of the left end portion of the motor output shaft 51. The differential device 54 includes a ring gear 54A to which rotation is transmitted from the deceleration mechanism 53. The left drive shaft 55 is connected to a left end portion of the differential device 54. The right drive shaft 56 is connected to a right end portion of the differential device 54. The drive shaft 56 is coaxially disposed inside the hollow motor output shaft 51.

The deceleration mechanism 53 includes the deceleration shaft 53A and a large-diameter first deceleration gear 53B and a small-diameter second deceleration gear 53C provided on the deceleration shaft 53A. The deceleration shaft 53A is disposed parallel to the motor output shaft 51 in front of the differential device 54. The first deceleration gear 53B meshes with a gear 51A on the motor output shaft 51, and the second deceleration gear 53C meshes with the ring gear 54A of the differential device 54.

The case 40 includes a cylindrical cylinder portion 40A having a near-perfect circular cross section and extending in the vehicle width direction, and a bulged portion 40B bulging frontward from a left end portion of the cylinder portion 40A. The cylinder portion 40A is a part that accommodates the motor 50, the motor output shaft 51, and the differential device 54. The bulged portion 40B is a part that accommodates the deceleration mechanism 53. Here, the case 40 has an elliptical shape combining the cylinder portion 40A and the bulged portion 40B in left side view, and has an L shape in which the cylinder portion 40A intersects the bulged portion 40B in plan view.

As illustrated in Figures 1 to 4, a left front bracket 10 for supporting the driving device 30 to the vehicle body 2 is fixed to a left end portion of the driving device 30, and a mount insulator 14 is connected to a front end portion 10E of the left front bracket 10. The mount insulator 14 is fixed to the vehicle body member 2B.

An elastic member 14A such as a mounting rubber is provided inside the mount insulator 14, and the left front bracket 10 and the mount insulator 14 are elastically connected via the elastic member 14A. Accordingly, the left end portion of the driving device 30 is elastically supported to the vehicle body member 2B via the left front bracket 10 and the mount insulator 14.

The left front bracket 10 includes three fastening portions 10A, 10B, 10C fastened to a left end portion of the first case 41. The fastening portion 10A is disposed in a position in front of the central position of the driving device 30 (axis position of motor output shaft 51) in the left end portion of the first case 41 and at the front end of the cylinder portion 40A. The fastening portion 10B is disposed in a position in front of and above the fastening portion 10A. The fastening portion 10C is disposed in a position in front of and below the fastening portion 10A.

A right front bracket 11 for supporting the driving device 30 to the vehicle body 2 is fixed to a right end portion of the driving device 30, and a mount insulator 15 is connected to a front end portion 11E of the right front bracket 11. The mount insulator 15 is fixed to the vehicle body member 2B.

An elastic member 15A such as a mounting rubber is provided inside the mount insulator 15, and the right front bracket 11 and the mount insulator 15 are elastically connected via the elastic member 15A. Accordingly, the right end portion of the driving device 30 is elastically supported to the vehicle body member 2B via the right front bracket 11 and the mount insulator 15.

The right front bracket 11 includes four fastening portions 11A, 11B, 11C, 11D fastened to a right end portion of the fourth case 44. The fastening portion 11A is fastened to the right end portion of the fourth case 44 in a position behind and above the center of the driving device 30. The fastening portion 11B is fastened to the right end portion of the fourth case 44 in a position in front of and below the center of the driving device 30.

An upper support portion 44A to which an upper portion of the right front bracket 11 and an upper portion of a high-voltage component 16 are fixed is formed in an upper portion of a front surface of the fourth case 44. The upper support portion 44A extends toward the vehicle front and vehicle upper side from a front surface of an outer peripheral portion of the fourth case 44. A front end surface of the upper support portion 44A forms a flat surface extending in the up-down direction.

A lower support portion 44B to which a lower portion of the right front bracket 11 and a lower portion of the high-voltage component 16 are fixed is formed in a lower portion of the front surface of the fourth case 44. The lower support portion 44B extends toward the vehicle front and vehicle lower side from the front surface of the outer peripheral portion of the fourth case 44. A front end surface of the lower support portion 44B forms a flat surface extending in the up-down direction.

The fastening portion 11C is fastened to a right end portion of the upper support portion 44A of the fourth case 44 in a position in front of and above the center of the driving device 30. The fastening portion 11D is fastened to a right end portion of the lower support portion 44B of the fourth case 44 in a position in front of and below the center of the driving device 30.

A rear bracket 12 for supporting the driving device 30 to the vehicle body 2 is fixed to a vehicle widthwise central portion of a rear surface of the driving device 30. The rear bracket 12 includes a main body portion 12E fastened to the driving device 30, and two vehicle body side-connection portions 12F extending rearward from the main body portion 12E. A dash panel 2C is provided behind the rear bracket 12, and the dash panel 2C partitions the engine compartment 3 from the vehicle interior (not illustrated) behind the engine compartment 3.

The main body portion 12E is formed into a substantially box shape having the long side in the vehicle width direction in plan view and back view. A mount insulator 20 is connected to a rear end portion of the vehicle body side-connection portion 12F. The mount insulator 20 is fixed to the subframe 2A.

An elastic member 20A such as a mounting rubber is provided inside the mount insulator 20, and the rear bracket 12 and the mount insulator 20 are elastically connected via the elastic member 20A. Accordingly, the rear surface of the driving device 30 is elastically supported to the subframe 2A via the rear bracket 12 and the mount insulator 20.

The main body portion 12E includes four fastening portions 12A, 12B, 12C, 12D fastened to the case 40. The fastening portion 12A is provided in an upper left corner of the main body portion 12E and fastened to a rear surface of the partition wall member 41A of the first case 41. The fastening portion 12B is provided in an upper right corner of the main body portion 12E and fastened to a rear surface of the third case 43.

The fastening portion 12C is provided in a lower left corner of the main body portion 12E and fastened to the rear surface of the partition wall member 41A of the first case 41. The fastening portion 12D is provided in a lower right corner of the main body portion 12E and fastened to the rear surface of the third case 43.

The high-voltage component 16 is fixed to a position closer to a vehicle widthwise right end portion on a front surface of the driving device 30. The high-voltage component 16 includes an inverter that converts electricity of a battery (not illustrated) into a predetermined voltage and frequency and supplies it to the motor 50. The high-voltage component 16 is formed into a substantially square box shape in front view. The high-voltage component 16 includes four fastening portions 16A, 16B, 16C, 16D fastened to the case 40.

The fastening portion 16A is provided in an upper left corner of the high-voltage component 16 and fastened to an upper portion of a front surface of the second case 42. The fastening portion 16C is provided in a lower left corner of the high-voltage component 16 and fastened to a lower portion of the front surface of the second case 42.

The fastening portion 16B is provided in an upper right corner of the high-voltage component 16 and fastened to a front end portion of the upper support portion 44A on the front surface of the fourth case 44. The fastening portion 16D is provided in a lower right corner of the high-voltage component 16 and fastened to a front end portion of the lower support portion 44B on the front surface of the fourth case 44.

An electric water pump 17 is disposed in front of the left end portion of the driving device 30 and above the left front bracket 10. The water pump 17 pumps out a coolant cooled by a radiator (not illustrated) to the driving device 30. The water pump 17 includes a coolant inlet pipe 17A that sucks in the coolant and a coolant outlet pipe 17B that extends in a direction perpendicular to the coolant inlet pipe 17A and pumps out the coolant. A support portion 10F for supporting the water pump 17 from below is formed integrally with the left front bracket 10 in an upper portion of the left front bracket 10.

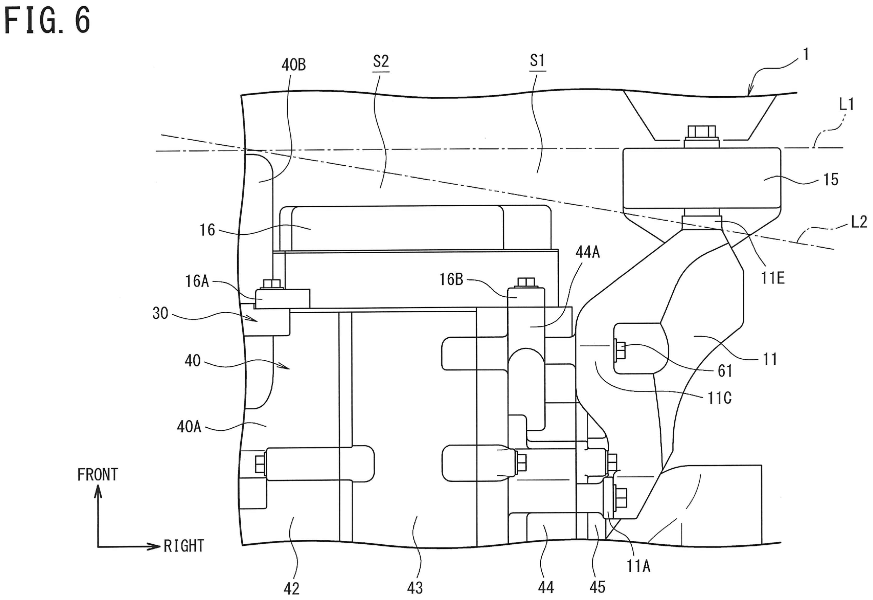

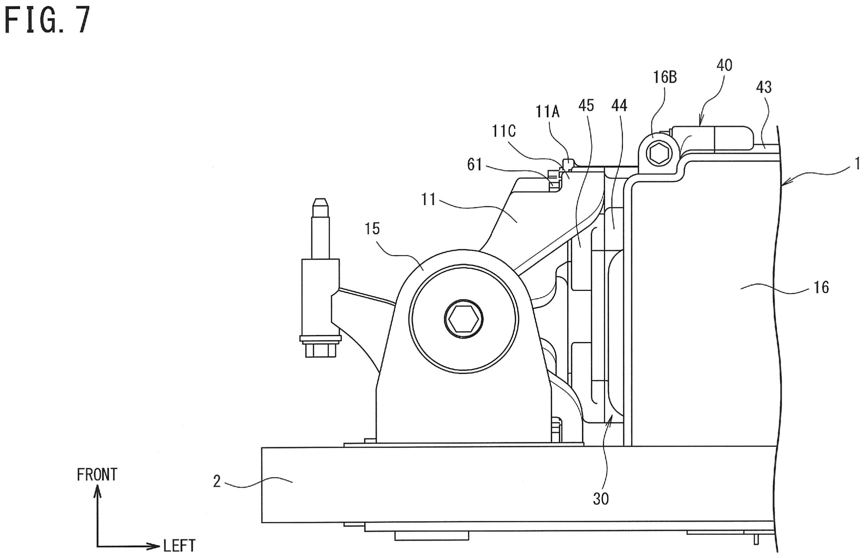

As illustrated in Figures 6 and 7, the right front bracket 11 is connected to the vehicle widthwise other end portion (right end portion) of the cylinder portion 40A of the case 40. The right front bracket 11 extends frontward while being inclined toward the vehicle widthwise other side (right side) from the vehicle widthwise other end portion of the cylinder portion 40A. The right front bracket 11 forms a bracket of the present invention.

The high-voltage component 16 is disposed in a first space S1 in front of the cylinder portion 40A and behind a first virtual line L1 passing through a front end position of a mount device including the mount insulator 15 and the right front bracket 11 and a front end position of the bulged portion 40B. Here, the front end position of the mount device is equivalent to the position of the front end portion of the mount insulator 15.

The high-voltage component 16 may be disposed in a second space S2 behind a second virtual line L2 passing through a connection portion of the mount device and the front end position of the bulged portion 40B. Here, the connection portion of the mount device is equivalent to the front end portion 11E of the right front bracket 11.

The right front bracket 11 is curved in a bow shape such that it bends toward the vehicle widthwise other side. That is, the right front bracket 11 does not extend linearly, but is curved in a bow shape such that its front left side forms the outside of the curve and its rear right side forms the inside of the curve.

The right front bracket 11 extends toward the vehicle front while being inclined toward the vehicle widthwise other side from a position, of the vehicle widthwise other end portion (right end portion) of the cylinder portion 40A, behind the rear end position of the high-voltage component 16.

The mount insulator 15 is disposed further on the vehicle widthwise other side (right side) than the vehicle widthwise other end portion (right end portion) of the high-voltage component 16. That is, the mount insulator 15 does not overlap the high-voltage component 16 in the front-rear direction, but is disposed on the vehicle widthwise right side of the high-voltage component 16.

As described above, in the present example, the high-voltage component 16 is disposed on the front surface of the driving device 30, the driving device 30 includes the case 40 including the cylindrical cylinder portion 40A extending in the vehicle width direction and the bulged portion 40B bulging toward the vehicle front from the vehicle widthwise one end portion of the cylinder portion 40A, the right front bracket 11 is connected to the vehicle widthwise other end portion of the cylinder portion 40A, and the right front bracket 11 extends toward the vehicle front while being inclined toward the vehicle widthwise other side from the vehicle widthwise other end portion of the cylinder portion 40A. Moreover, the mount insulator 15 including the elastic member 15A is connected to the front end portion 11E of the right front bracket 11, and the high-voltage component 16 is disposed in the first space S1 in front of the cylinder portion 40A and behind the first virtual line L1 passing through the front end position of the mount device including the mount insulator 15 and the right front bracket 11 and the front end position of the bulged portion 40B.

With this configuration, the first space S1 behind the first virtual line L1 passing through the front end portion of the mount insulator 15 which is the front end position of the mount device and the front end portion of the bulged portion 40B is a recessed portion in front of the case 40 and surrounded by the bulged portion 40B, the right front bracket 11, and the mount insulator 15. By disposing the high-voltage component 16 in the first space S1 that had been a dead space, it is possible to save space in the engine compartment 3. Additionally, a load in the event of a frontal collision of the vehicle can be received by the mount insulator 15, the right front bracket 11, and the bulged portion 40B of the case 40, so that the high-voltage component 16 can be protected from the load in the event of a frontal collision of the vehicle. In addition, the load and impact in the event of a frontal collision of the vehicle can be absorbed by the elastic member 15A of the mount insulator 15. As a result, it is possible to protect the high-voltage component 16 from a load in the event of a frontal collision of the vehicle while saving space in the engine compartment 3. In addition, since the high-voltage component 16 is disposed on the front surface of the driving device 30, it is possible to cool the high-voltage component 16 efficiently by traveling wind.

Moreover, in the present example, the high-voltage component 16 may be disposed in the second space S2 behind the second virtual line L2 passing through the connection portion of the mount device and the front end position of the bulged portion 40B.

As a result, the second space S2 behind the second virtual line L2 passing through the front end portion 11E of the right front bracket 11 which is the connection portion of the mount device and the front end portion of the bulged portion 40B is a recessed portion in front of the case 40 and surrounded by the bulged portion 40B and the right front bracket 11. By disposing the high-voltage component 16 in the second space S2 that had been a dead space, it is possible to save space in the engine compartment 3. Additionally, a load in the event of a frontal collision of the vehicle can be received by the right front bracket 11 and the bulged portion 40B of the case 40, so that the high-voltage component 16 can be protected from the load in the event of a frontal collision of the vehicle. As a result, it is possible to protect the high-voltage component 16 from a load in the event of a frontal collision of the vehicle while saving space in the engine compartment 3. In addition, since the high-voltage component 16 is disposed on the front surface of the driving device 30, it is possible to cool the high-voltage component 16 efficiently by traveling wind.

Additionally, in the present example, the right front bracket 11 is curved in a bow shape such that it bends toward the vehicle widthwise other side (right side).

As a result, since the right front bracket 11 is curved in a bow shape, when a load acts on the tip end of the right front bracket 11 due to an impact in the event of a vehicle collision, the right front bracket 11 deforms such that its front portion is displaced toward the vehicle widthwise other side (right side) and toward the rear, whereby the impact in the event of a vehicle collision on the tip end portion can be released. As a result, it is possible to prevent the right front bracket 11 from deforming toward the high-voltage component 16 on the vehicle widthwise one side and protect the high-voltage component 16.

Moreover, in the present example, the right front bracket 11 extends toward the vehicle front while being inclined toward the vehicle widthwise other side from a position, of the vehicle widthwise other end portion of the cylinder portion 40A, behind the rear end position of the high-voltage component 16.

As a result, the vehicle widthwise spacing between the right front bracket 11 and the high-voltage component 16 can be made sufficiently large, so that it is possible to prevent the right front bracket 11 from coming into contact with the high-voltage component 16 in the event of a frontal collision of the vehicle.

Moreover, in the present example, the mount insulator 15 is disposed further on the vehicle widthwise other side than the vehicle widthwise other end portion of the high-voltage component 16.

As a result, when the mount insulator 15 is pushed rearward in the event of a frontal collision of the vehicle, it is possible to prevent the mount insulator 15 from coming into contact with the high-voltage component 16.

While an example of the present invention has been disclosed, it is clear that a person skilled in the art could make modifications without departing from the scope of the present invention. All such modifications and equivalents are intended to be included in the following claims.

### [Reference Signs List]

1... vehicle, 2... vehicle body, 3... engine compartment, 11...right front bracket (bracket), 11E...front end portion, 15...mount insulator, 15A...elastic member, 16...high-voltage component, 30...driving device, 40...case, 40A...cylinder portion, 40B...bulged portion, L1..first virtual line, L2...second virtual line, S1...first space, S2... second space

## Claims

1. An electric vehicle (1) comprising:
a driving device (30) disposed in an engine compartment (3) formed in a front portion of the vehicle (1), the driving device (30) being configured to generate a motor torque for traveling; and
a bracket (11) that supports a vehicle widthwise end portion of the driving device (30) to a vehicle body (2), **characterized in that**:
a high-voltage component (16) is disposed on a front surface of the driving device (30);
the driving device (30) includes a case (40), the case (40) including a cylindrical cylinder portion (40A) extending in a vehicle width direction and a bulged portion (40B) bulging toward a vehicle front from a vehicle widthwise one end portion of the cylinder portion (40A);
the bracket (11) is connected to a vehicle widthwise other end portion of the cylinder portion (40A);
the bracket (11) extends toward the vehicle front while being inclined toward a vehicle widthwise other side from the vehicle widthwise other end portion of the cylinder portion (40A);
a mount insulator (15) including an elastic member (15A) is connected to a front end portion (11E) of the bracket (11); and
the high-voltage component (16) is disposed in a first space (S1) in front of the cylinder portion (40A) and behind a first virtual line (L1) passing through a front end position of a mount device including the mount insulator (15) and the bracket (11) and a front end position of the bulged portion (40B).

2. The electric vehicle according to claim 1, **characterized in that** the high-voltage component (16) is disposed in a second space (S2) behind a second virtual line (L2) passing through a connection portion of the mount device and the front end position of the bulged portion (40B).

3. The electric vehicle according to any one of claims 1 and 2, **characterized in that** the bracket (11) is curved in a bow shape such that the bracket (11) bends toward the vehicle widthwise other side.

4. The electric vehicle according to claim 3, **characterized in that** the bracket (11) extends toward the vehicle front while being inclined toward the vehicle widthwise other side from a position, of the vehicle widthwise other end portion of the cylinder portion (40A), behind a rear end position of the high-voltage component (16).

5. The electric vehicle according to claim 2, **characterized in that** the mount insulator (15) is disposed further on the vehicle widthwise other side than a vehicle widthwise other end portion of the high-voltage component (16).
